(19) Europäisches Patentamt / European Patent Office / Office européen des brevets

(11) **EP 2 162 313 B1**

(12) **FASCICULE DE BREVET EUROPEEN**

(45) Date de publication et mention
de la délivrance du brevet:
**01.03.2017 Bulletin 2017/09**

(21) Numéro de dépôt: **08760002.9**

(22) Date de dépôt: **26.05.2008**

(51) Int Cl.:
***B60M 1/36*** *(2006.01)*    ***B60M 3/00*** *(2006.01)*
***B60L 11/16*** *(2006.01)*    ***B60L 5/42*** *(2006.01)*

(86) Numéro de dépôt international:
**PCT/EP2008/056403**

(87) Numéro de publication internationale:
**WO 2009/003765 (08.01.2009 Gazette 2009/02)**

(54) **INSTALLATION D'ALIMENTATION D'UN VEHICULE FERROVIAIRE**

EINSPEISUNGSEINRICHTUNG EINES EISENBAHNFAHRZEUGS

POWER SUPPLY INSTALLATION FOR A RAILWAY VEHICLE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **29.06.2007 FR 0704692**

(43) Date de publication de la demande:
**17.03.2010 Bulletin 2010/11**

(73) Titulaire: **ALSTOM Transport Technologies
93400 Saint-Ouen (FR)**

(72) Inventeurs:
• **MOSKOWITZ, Jean-Paul
F-75013 Paris (FR)**
• **CHRISTELLER, Reinhart
F-17000 La Rochelle (FR)**

(74) Mandataire: **Lavoix
2, place d'Estienne d'Orves
75441 Paris Cedex 09 (FR)**

(56) Documents cités:
DE-C- 932 023    DE-C1- 4 239 164
FR-A- 2 866 607    FR-A- 2 871 744
FR-A1- 2 762 810    FR-A1- 2 910 391

## Description

L'invention se rapporte à une installation d'alimentation en énergie électrique de véhicules de transport en commun à traction électrique.

Il est connu une installation d'alimentation en énergie électrique d'un tramway comprenant un dispositif d'alimentation embarqué à bord dudit tramway. Une telle installation est décrite dans la demande de brevet EP 0982 176 déposée par la demanderesse. Le dispositif d'alimentation embarqué comprend un volant d'inertie. Il est rechargé lorsque le véhicule est arrêté en station pour permettre la montée et la descente des voyageurs. La recharge du dispositif d'alimentation embarqué dudit tramway est effectuée au moyen d'un dispositif externe au véhicule disposé en station d'arrêt. Lorsque le véhicule quitte la station, il fonctionne en mode autonome, seul le dispositif d'alimentation embarqué alimente alors les moteurs de traction ainsi que les équipements auxiliaires du type climatisation, dispositifs d'éclairage etc. , du véhicule afin de faire circuler le véhicule entre deux stations d'arrêt et d'assurer le confort des passagers.

Le document EP 2762 810 divulgue un système de transport ferroviaire avec une installation par le sol segmentée, dont les segments ne sont sous tension qu's'ils se trouvent inscrit dans l'emprise au sol d'un véhicule.

Le document WO2008/087287, qui fait partie de l'état de la technique selon l'article 54(3) CBE, divulgue un système de transport avec une voie jalonnée de station et une installation d'alimentation confinée en certains portions de la voie, comme par exemple de montées ou des stations.

La demanderesse a réalisé des simulations de l'énergie consommée par un tel tramway, sur un parcours jalonné de telles stations $S_x, S_y$.

Une simulation a par exemple été réalisée pour un tramway d'une longueur de 30m pesant 57 tonnes lorsqu'il est à charge pleine et équipé d'un dispositif d'alimentation embarqué à bord du véhicule du type volant d'inertie susceptible de stocker une énergie maximale de 4kWh et de délivrer une puissance maximale de 200kW. On entend par véhicule à charge pleine, un véhicule transportant 6 personnes au mètre carré.

Le véhicule pour lequel on a effectué la simulation comprend également des équipements auxiliaires comprenant l'ensemble des consommateurs d'électricité qui ne participent pas à la propulsion du véhicule de traction comme par exemple l'électronique de bord, le dispositif d'éclairage, le chauffage, les moteurs des compresseurs de climatisation, les systèmes d'information aux voyageurs à bord du train, etc. La puissance consommée par les équipements auxiliaires est au maximum de 63kW. C'est par exemple le cas lorsque le chauffage fonctionne à puissance maximale.

Cette simulation a été effectuée pour un plan de route particulier défini par l'exploitant.

On entend par plan de route, les besoins de l'exploitant en termes de performances du système de transport sur un parcours jalonné de stations d'arrêt $S_x$, $S_y$. On appelle parcours $T_{xy}$ le trajet du véhicule démarrant en station d'arrêt $S_x$ et se déplaçant jusqu'à la station $S_y$ pour s'y arrêter.

Ces besoins sont par exemple exprimés en fonction des critères suivants :

- Le profil de vitesse sur chaque trajet entre deux stations d'arrêt. On entend par profil de vitesse sur le trajet entre deux stations consécutives, la variation de la vitesse du véhicule en fonction de sa position sur le trajet entre deux stations consécutives. En place du profil de vitesse, l'exploitant définit par exemple un temps maximal que le véhicule est autorisé à mettre pour effectuer le trajet entre deux stations consécutives dans les conditions normales de conduite.

- Le temps maximal d'arrêt du véhicule en station d'arrêt pour permettre la montée et la descente des passagers et la recharge du dispositif d'alimentation embarqué.

- Le niveau de confort que l'on doit être capable d'assurer aux passagers. Plus précisément, il s'agit de la puissance que l'installation d'alimentation est susceptible de fournir aux équipements auxiliaires sur chaque trajet entre deux stations consécutives pour faire fonctionner les équipements auxiliaires.

- Les évènements imprévus, auxquels doit être capable de faire face le véhicule sur les trajets entre deux stations consécutives.

On entend par évènements imprévus, les évènements que le véhicule est susceptible de rencontrer sur son trajet et qui entraîneront une sur consommation d'énergie. Il s'agit par exemple d'un arrêt du véhicule à un carrefour au niveau duquel le véhicule croise un autre véhicule cet arrêt n'étant pas initialement prévu. Il peut également s'agir d'un arrêt intempestif imposé par un piéton traversant la voie ou du à un blocage de circulation.

Par exemple, l'exploitant peut souhaiter que le véhicule soit capable de s'arrêter une fois entre deux stations de façon inopportune, de redémarrer et d'accélérer pour atteindre sa vitesse de croisière, sans détérioration de ses performances de traction ni du confort des passagers sur le restant du trajet.

Pour faire face à un événement de ce type, l'installation d'alimentation doit être susceptible de mettre à disposition des moteurs et des équipements auxiliaires, l'énergie nécessaire pour alimenter le véhicule durant son arrêt intempestif et pour assurer le redémarrage du véhicule et sa mise en vitesse de manière à atteindre sa vitesse de croisière.

Les résultats de la simulation de l'énergie consommée par le tramway sur les trajets séparant deux stations d'arrêt consécutives sont répertoriés sur le Tableau A joint à la présente demande. Le plan de route pris pour effectuer cette simulation est le suivant :

- L'exploitant a défini un temps de parcours maximal $t_{xy}$ du véhicule sur chaque trajet $T_{xy}$ entre deux stations consécutives $S_x$ et $S_y$.
- Le niveau de confort demandé par l'exploitant équivaut à un mode de fonctionnement des équipements auxiliaires dans lequel ils consomment une puissance de 63kW sur tout le parcours et donc sur chaque trajet. Ce mode de fonctionnement équivaut à une énergie $Ea_{xy}$ exprimée en kWh consommée par les auxiliaires sur le trajet $T_{xy}$ égale à $Ea_{xy} = 63 * t_{xy} / 3600$, $t_{xy}$ étant exprimé en secondes.
  Ce mode de fonctionnement équivaut à un fonctionnement maximal du chauffage.
- L'exploitant a recommandé de faire face sans dégrader l'exploitation à des évènements imprévus détaillés plus loin ce qui nous conduit à prévoir un surplus d'énergie $Es_{xy}$ de 2,2 kWh par rapport à l'énergie consommée par les moteurs de traction et les équipements auxiliaires lorsque le trajet $T_{xy}$ se déroule dans les conditions normales de conduite.
- Le temps maximal d'arrêt $ta_x$ en station $S_x$ a été fixé de manière à ce que le volant d'inertie puisse toujours être rechargé complètement en station d'arrêt $S_x$.
  En terme d'énergie, cela revient à dire que le volant d'inertie stocke une énergie de départ $Ev'_x$ de 4kWh lorsqu'il démarre en station $S_x$ et peut arriver en station $S_y$ à vide, avec une énergie d'arrivée $Ev_y$ nulle.

Lors de la simulation, la demanderesse a calculé les énergies consommées par les équipements du véhicule pour parcourir le trajet $T_{xy}$ entre deux stations successives $S_x$ et $S_y$, en respectant le plan de route défini précédemment:

- $Em_{xy}$, l'énergie consommée par les moteurs de traction,
- $Et_{xy}$, l'énergie totale dont doivent pouvoir disposer les équipements pour effectuer le trajet $T_{xy}$ en respectant le plan de route avec $Et_{xy} = Em_{xy} + Ea_{xy} + Es_{xy}$,
- $Eb_{xy}$, l'énergie consommée par les moteurs de traction et les équipements auxiliaires pour effectuer le trajet $T_{xy}$ sans rencontrer d'évènements imprévus.

Le trajet $T_{xy}$ présente une pente moyenne $P_{xy}$ (exprimée en ‰) et une longueur $l_{xy}$ (exprimée en mètres).

On voit clairement que l'énergie $Em_{xy}$ consommée par les moteurs de traction sur un trajet $T_{xy}$ dépend du profil de voie sur ledit trajet et notamment des pentes et de la distance à parcourir sur ces trajets.
Par profil de voie sur un trajet $T_{xy}$, on entend l'évolution de la déclivité du sol le long du trajet du véhicule et la longueur $l_{xy}$ du trajet $T_{xy}$.

En effet, en comparant les trajets $T_{cd}$ et $T_{ij}$ dont les longueurs sont peu différentes mais dont les pentes moyennes sont très différentes, on constate que l'énergie $Em_{cd}$ consommée par les moteurs de traction est nettement inférieure à l'énergie $Em_{ij}$. L'énergie consommée par les moteurs de traction est d'autant plus importante que la voie est ascendante sur ce trajet.

En comparant l'énergie consommée par les moteurs de traction sur les trajets $T_{jk}$ et $T_{ij}$ dont les longueurs respectives sont de 423 m et 888 m, et présentant des pentes moyennes sensiblement identiques, on constate que plus la longueur à parcourir est importante, plus l'énergie consommée par les moteurs de traction est importante.

On constate que l'énergie $Eb_{ab}$, $Eb_{bc}$ et $Eb_{ij}$ que l'installation d'alimentation doit être capable de mettre à disposition du véhicule pour alimenter les équipements auxiliaires et les moteurs de traction sur les trajets respectifs $T_{ab}$, $T_{bc}$, $T_{ij}$ de manière à ce que le véhicule effectue ces trajets dans le temps respectifs $t_{ab}$, $t_{bc}$, $t_{ij}$ impartis par l'exploitant sont plus importantes que sur le reste du parcours du véhicule. En effet, les trajets $T_{ab}$, $T_{bc}$, $T_{ij}$, présentent respectivement une pente importante, une longueur importante et une longueur et une pente moyenne importante.

Les énergies $Eb_{ab}$, $Eb_{bc}$ et $Eb_{ij}$ sont toutes trois supérieures à l'énergie que l'installation électrique peut mettre à disposition des moteurs de traction et des équipements auxiliaires sur les trajets $T_{ab}$, $T_{bc}$, $T_{ij}$. L'énergie que l'installation électrique est capable de mettre à disposition des moteurs de traction et des équipements auxiliaires sur les trajets $T_{xy}$, sur lesquels le véhicule est alimenté uniquement par le volant d'inertie est égale à $Ev_{xy} = Ev'_x - Evy$. En l'espèce, $Ev_{xy}$ est égale à 4 kWh sur tout le parcours du véhicule.

En conclusion, l'installation électrique n'est pas capable de mettre suffisamment d'énergie à disposition des moteurs de traction et des équipements auxiliaires pour effectuer les trajets $T_{ab}$, $T_{bc}$, $T_{ij}$ même si le véhicule ne rencontre pas d'événements imprévus sur ces trajets.

De plus, on constate que l'installation électrique de l'art antérieur est capable de mettre à disposition des moteurs de traction et des équipements auxiliaires l'énergie nécessaire $Et_{xy}$, pour que le véhicule circule entre deux stations successives en respectant le plan de route, uniquement sur le trajet $T_{hi}$ présentant une longueur faible et une pente moyenne fortement descendante et pour lequel n'énergie $Et_{hi}$ est inférieure à $Ev_{hi}$ soit 4kWh.

Par conséquent, le véhicule ne dispose pas suffisamment d'énergie pour respecter le plan de route déterminé par l'exploitant sur les trajets $T_{xy}$ excepté sur le trajet $T_{hi}$.

Il est du mérite de la demanderesse d'avoir mis en évidence que l'installation électrique de l'art antérieur ne permet pas au véhicule de respecter le plan de route sur tout le parcours du véhicule et notamment sur les trajets entre deux stations successives sur lesquels le profil de voie présente une longueur importante et des pentes ascendantes importantes.

Un des buts de la présente invention est de proposer une installation d'alimentation d'un véhicule ferroviaire capable de fournir suffisamment d'énergie audit véhicule pour lui permettre d'effectuer un parcours en respectant un plan de route prédéterminé.

A cet effet l'invention porte sur un système de transport selon la revendication 1.

Suivant des modes de réalisation particuliers, l'installation d'alimentation comporte l'une ou plusieurs des caractéristiques optionnelles des revendications 2 à

Le système de transport selon l'invention présente l'avantage d'être esthétique car on s'affranchit d'une alimentation par ligne caténaire entre les deux stations d'arrêt, ce qui est de plus en plus recherché en centre ville.

Ce système est moins coûteux qu'un système d'alimentation par le sol installé sur tout le parcours du véhicule.

Le système de transport selon l'invention présente l'avantage de respecter le plan de route défini par l'exploitant quelle que soit la géographie du trajet c'est à dire le profil de la voie entre deux stations consécutives.

Le système de transport selon l'invention permet également d'assurer le service même lorsque le véhicule rencontre des évènements imprévus.

L'invention sera mieux comprise à la lecture de la description qui va suivre, donnée uniquement à titre d'exemple et faite en se référant aux dessins et au tableau annexés, sur lesquels :

- Le tableau A des énergies consommées par le véhicule, déjà en partie décrit, répertorie les énergies consommées et fournies par les équipements du véhicule sur un parcours s'étendant d'une station $S_a$ à une station $S_k$ jalonné de stations $S_x$ avec x = b, c, d, e, f, g , h , i, j.

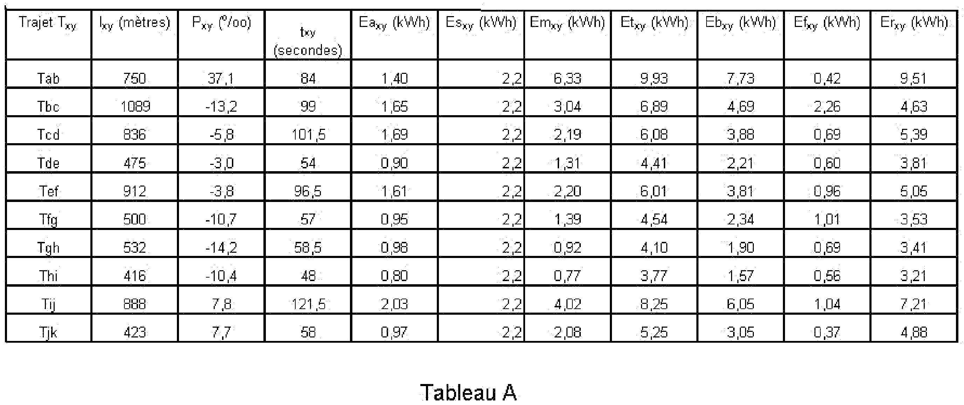

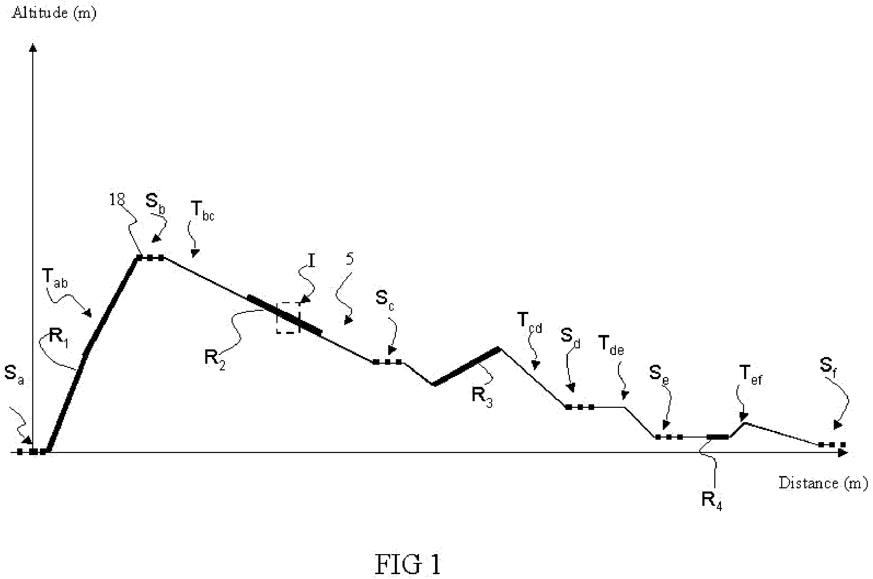

- La figure 1 est une représentation schématique des variations d'altitude en mètres d'une voie de transport et de la disposition du dispositif d'alimentation par le sol, faisant partie de l'installation d'alimentation selon l'invention, sur le parcours du véhicule entre la station $S_a$ et la station $S_f$ .

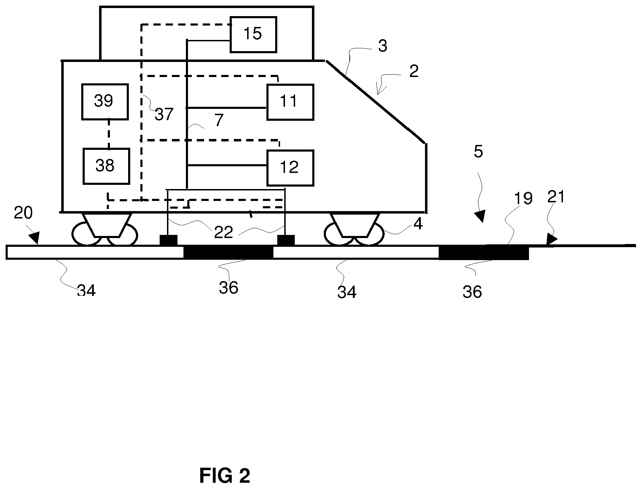

- La figure 2 est un schéma fonctionnel d'une installation d'alimentation selon l'invention, un véhicule étant situé sur portion de voie équipée d'un dispositif d'alimentation par le sol ladite portion de voie équipée étant adjacente à une portion de voie dépourvue du dispositif d'alimentation par le sol.

La figure 1 représente le profil de voie 5 sur le parcours du véhicule de la station $S_a$ à la station $S_f$ sur une voie 5.

Le mode de réalisation de l'invention représenté sur la figure 1, est adapté pour anticiper les manques d'énergie des équipements du véhicule afin de fournir suffisamment d'énergie au véhicule pour respecter le plan de route défini précédemment sur tout le parcours du véhicule quel que soit le profil de voie sur le trajet $T_{xy}$.

Comme représenté sur la figure 1, de façon connue en soi, les stations d'arrêt $S_x$, $S_y$ adaptées pour permettre la montée et la descente des passagers, sont équipées d'un dispositif de recharge en station 18 représenté en traits pointillés sur la figure 1.

On entend par dispositif de recharge en station 18 un dispositif pour recharger un système de stockage d'énergie 15 et alimenter des équipements auxiliaires 12 lorsque le véhicule est à l'arrêt en station d'arrêt $S_x$ et connecté électriquement audit dispositif de recharge.

Le système de stockage d'énergie 15 ainsi que les équipements auxiliaires 12 sont représentés sur la figure 2 et seront explicités par la suite.

Conformément à l'invention, l'installation électrique comprend un dispositif 19 d'alimentation par le sol équipant des portions de voie équipées 20 des trajets $T_{ab}$, $T_{bc}$, $T_{cd}$, $T_{ef}$, $T_{ij}$, $T_{jk}$ ledit dispositif d'alimentation par le sol 19 étant propre à alimenter le véhicule en énergie électrique lorsque celui-ci circule sur une portion de voie équipée 20 dudit dispositif d'alimentation par le sol 19 comme cela sera décrit plus en détails dans la suite du texte. Une portion de voie dépourvue 21 est une portion de la voie 5 dépourvue du dispositif d'alimentation par le sol 19.

Par alimenter le véhicule en énergie électrique, on entend alimenter les équipements électriques dudit véhicule. Plus précisément, le dispositif d'alimentation par le sol 19 est apte à alimenter le système de stockage d'énergie 15, les équipements auxiliaires 12 ainsi que les moteurs de traction 11.

Le choix des emplacements des dispositifs d'alimentation par le sol 19 selon le premier mode de réalisation de l'invention va maintenant être décrit.

Comme ce sera décrit plus en détail dans la suite de la description, dans le mode de réalisation représenté en figure 2, les moteurs de traction 11 du véhicule sont réversibles. Ils sont aptes à fonctionner en mode consommateur dans lequel ils fournissent l'énergie de traction aux roues 4 du véhicule 2, et en mode générateur dans lequel ils génèrent un couple de freinage et sont aptes à charger le système de stockage d'énergie 15 embarqué à bord du véhicule 2.

Dans la suite de la description, on va décrire un système comprenant un véhicule équipé d'un dispositif de stockage d'énergie embarqué consistant en un dispositif à alimentation cinétique d'énergie. L'homme du métier remplacerait aisément ce dispositif à accumulation cinétique d'énergie par un dispositif du type supercondensateurs ou batteries.

On a donc répertorié sur le tableau des consommations d'énergie du véhicule, l'énergie $Ef_{xy}$ de freinage qui est l'énergie que les moteurs de traction 11 sont susceptibles de fournir au volant d'inertie sur le trajet $T_{xy}$ pour le recharger. Les valeurs de l'énergie $Ef_{xy}$ sur les trajets $T_{xy}$ ont été obtenues par simulation.

L'énergie Er$_{xy}$ est l'énergie réelle que l'installation électrique doit être susceptible de fournir au véhicule 2 de façon à respecter le plan de route sur le trajet T$_{xy}$, une énergie de freinage Ef$_{xy}$ étant utilisée pour charger le volant d'inertie sur le trajet T$_{xy}$.

$$Er_{xy} = Et_{xy}-Ef_{xy}.$$

Dans le mode de réalisation décrit, on a équipé les trajets T$_{ab}$, T$_{bc}$, T$_{cd}$, T$_{ef}$, T$_{ij}$, T$_{jk}$ sur lesquels les énergies Er$_{ab}$, Er$_{bc}$, Er$_{cd}$, Er$_{ef}$, Er$_{ij}$, Er$_{jk}$ sont supérieures à l'énergie Ev$_{ab}$, Ev$_{bc}$, Ev$_{cd}$, Ev$_{ef}$, Ev$_{ij}$, Ev$_{jk}$ que le volant d'inertie embarqué 15 est capable de mettre à disposition du véhicule 2 sur les trajets respectifs T$_{ab}$, T$_{bc}$, T$_{cd}$, T$_{ef}$, T$_{ij}$, T$_{jk}$.
On a représenté sur la figure 1 uniquement les trajets T$_{ab}$, T$_{bc}$, T$_{cd}$, T$_{ef}$.

L'énergie Ev$_{xy}$ que le système à accumulation cinétique d'énergie 15 est capable de mettre à disposition du véhicule 2 sur un trajet T$_{xy}$ est déterminée par le plan de route et est ici égale à l'énergie maximale que le système à accumulation cinétique d'énergie 15 est capable de stocker soit 4 kWh car le temps maximal d'arrêt ta$_x$ en station d'arrêt S$_x$ est suffisant pour charger complètement le dispositif à accumulation cinétique en énergie 15.

On a donc agencé en dehors de stations d'arrêt, sur des portions de la voie 5 des trajets T$_{ab}$, T$_{bc}$, T$_{cd}$, T$_{ef}$, T$_{ij}$, T$_{jk}$ des dispositifs d'alimentation par le sol 19 de manière à alimenter le véhicule 2 lorsque celui-ci se trouve sur la portion de voie équipée 20 dudit dispositif d'alimentation par le sol 19.

En particulier, un dispositif d'alimentation par le sol 19 équipe au moins une portion de la voie sur un trajet T$_{xy}$ entre deux stations consécutives, sur lequel l'énergie Ev$_{xy}$ que le système à accumulation cinétique d'énergie 15 est capable de mettre à disposition du véhicule 2 est insuffisante pour alimenter les moteurs de traction 11 et les équipements auxiliaires 12, en respectant le plan de route défini par l'exploitant.

De préférence, comme on l'expliquera plus en détails dans la suite de la description, les dispositifs d'alimentation par le sol sont installés sur les portions de la voie sur lesquelles l'énergie et/ou la puissance susceptibles d'être consommées par les moteurs de traction et / ou les équipements auxiliaires est plus importante que sur le reste du trajet. Plus précisément, on équipe de préférence, d'un dispositif d'alimentation par le sol 19, les portions de la voie 5 étant en pente ascendante dans le sens de déplacement du véhicule ainsi que les portions de la voie 5 sur lesquelles le véhicule a une forte probabilité d'accélérer et/ou de marquer un arrêt imprévu.

A cet effet, comme visible sur la figure 1 une portion de voie 20 équipée d'un dispositif d'alimentation par le sol 19 s'étend sur toute la longueur du trajet T$_{ab}$.

En effet, l'énergie que l'installation doit être capable de fournir au véhicule Er$_{ab}$ étant de 9,51 kWh, cette énergie est plus de deux fois supérieure à l'énergie Ev$_{ab}$. On a donc équipé toute la voie 5 entre les stations S$_a$ et S$_b$ d'un tronçon d'alimentation par le sol. Il est important de remarquer que la portion de voie R1 que nous avons équipée d'un dispositif d'alimentation par le sol 19, entre les stations S$_a$ et S$_b$ présente une pente moyenne ascendante dans le sens du trajet T$_{ab}$. La voie adjacente sur laquelle le trajet s'effectue dans le sens contraire n'est pas équipée du dispositif d'alimentation par le sol car la voie est globalement descendante dans le sens du trajet T$_{ba}$. On n'équipe pas les deux voies adjacentes sur lesquelles le véhicule circule en sens contraire ce qui permet de proposer un système économique.

Les besoins en énergie du véhicule sur le trajet T$_{ab}$ sont importants car la pente ascendante est particulièrement forte sur ce trajet. Les moteurs consomment beaucoup d'énergie sur ce trajet pour fournir l'énergie potentielle au véhicule en plus de l'énergie cinétique nécessaire à son déplacement.

On a équipé une portion de voie R2 entre les stations S$_b$ et S$_c$ d'un dispositif d'alimentation par le sol 19. En effet, l'énergie Ev$_{bc}$ que le système à accumulation cinétique d'énergie 15 est susceptible de mettre à disposition du véhicule sur le trajet T$_{bc}$ est inférieure à l'énergie que l'installation électrique doit être capable de mettre à disposition du véhicule pour effectuer le trajet T$_{bc}$ en respectant le plan de route car le trajet T$_{bc}$ présente une longueur importante.

Entre les stations S$_b$ et S$_c$, une portion de voie 20 est équipée d'un dispositif d'alimentation par le sol 19. Cette portion de voie est appelée R2. Elle s'étend continûment sur toute la longueur de l'intersection I et de part et d'autre de cette intersection I.

L'énergie, dont les moteurs de traction et les équipements auxiliaires doivent disposer pour respecter le plan de route sur le trajet T$_{bc}$ étant de 4,63kWh, elle est très peu supérieure à l'énergie Ev$_{bc}$ que le volant d'inertie est susceptible de mettre à disposition du véhicule sur le trajet T$_{bc}$
On entend par intersection, une zone de croisement entre la voie du tramway et une route, ladite voie étant susceptible d'être traversée, dans cette zone, par un véhicule circulant sur la route. Le véhicule a une forte probabilité d'être contraint de s'arrêter avant ou sur ladite intersection pour éviter un choc avec un véhicule ou un piéton traversant l'intersection.
Ce type d'arrêt est consommateur d'énergie car il allonge la durée du trajet ce qui augmente la consommation des équipements auxiliaires et impose un redémarrage suivi d'une montée en vitesse du véhicule. Cette accélération engendre une consommation de puissance et d'énergie de la part des moteurs de traction.

Une portion de voie 20, appelée portion de voie R3, est équipée d'un dispositif d'alimentation par le sol 19 entre les stations S$_c$ et S$_d$. Sur cette portion de voie pentue et ascendante, il y a une probabilité importante que les moteurs de traction 11 consomment une énergie importante pour vaincre la force de gravité et tracter le véhicule à une vitesse convenable.

En variante, on agence un dispositif d'alimentation par le sol 19, entre les stations $S_c$ et $S_d$, sur une portion de la voie 5 qui est plane ou en pente descendante mais étant définie comme une zone d'accélération sur le plan de route. En effet, les moteurs de traction 11 sont consommateurs d'énergie sur une zone définie comme étant une zone d'accélération sur le plan de route.

Entre les stations $S_d$ et Se, la voie est dépourvue de dispositif d'alimentation par le sol 19 car l'énergie $Ev_{de}$ que le volant d'inertie est susceptible de mettre à disposition du véhicule sur le trajet $T_{de}$ est supérieure à l'énergie $Er_{de}$ dont le véhicule doit pouvoir disposer pour respecter le plan de route sur le trajet $T_{de}$.

La portion de voie 20 équipée d'un dispositif 19 d'alimentation par le sol, située entre les deux stations Se et $S_f$ et appelée R4 est une zone plane qui est déterminée comme une zone d'accélération sur le plan de route.

On va maintenant décrire structurellement l'installation d'alimentation du véhicule ferroviaire 2 adapté pour circuler sur des rails métalliques non représentés, s'étendant parallèlement entre eux.

Le véhicule 2 comprend une caisse 3 de transport de voyageurs supportée par un ensemble de roues 4. Les rails de roulement sont adaptés pour porter les roues 4 et assurer leur guidage.

Dans une variante, le véhicule 2 comprend une succession de voitures comprenant chacun une caisse 3 dont au moins 2 sont supportées par des roues 4.

L'installation d'alimentation selon l'invention est adaptée pour fournir de l'énergie électrique à des moteurs électriques de traction 11 et à des équipements auxiliaires 12 par l'intermédiaire d'un bus de puissance 7 propre à véhiculer une tension continue.

Les roues 4 motrices sont entraînées par des moteurs électriques 11 alimentés par des convertisseurs de traction non représentés pour plus de clarté.

Les convertisseurs de traction sont aptes à transformer la tension continue fournie par le bus 7 de puissance pour générer une tension alternative pour l'alimentation des moteurs. L'ensemble moteurs de traction 11 et convertisseurs de traction constitue la chaîne de traction du véhicule

Les équipements auxiliaires 12 comprennent l'ensemble des consommateurs d'électricité qui ne participent pas à la propulsion du véhicule 2 de traction comme par exemple l'électronique de bord, le dispositif d'éclairage, les groupes de climatisation, les systèmes d'information aux voyageurs à bord du train, le chauffage etc.

On a représenté un véhicule 2 comprenant une seule voiture. Dans le cas d'un véhicule comprenant plusieurs voitures, les équipements électriques 7, 11, 12 sont par exemple répartis sur les voitures du véhicule 2.

Les moteurs 11 électriques sont réversibles. Les moteurs 11 électriques de traction soit sont alimentés par le bus de puissance 7, soit génèrent un couple de freinage fournissant de l'énergie électrique aux convertisseurs de traction qui transforment la tension alternative générée par les moteurs 11 de traction de manière à générer une tension continue sur le bus 7 de puissance. Le véhicule 2 comprend un dispositif accumulation cinétique d'énergie 15 embarqué à bord du véhicule 2, ledit dispositif accumulation cinétique d'énergie 15 étant apte à accumuler de l'énergie sous forme d'énergie cinétique et à la restituer sous forme d'énergie électrique De façon connue en soi, le dispositif de stockage d'énergie 15. Le dispositif de stockage d'énergie est, dans le mode de réalisation décrit, un dispositif à accumulation cinétique d'énergie qui comporte un moteur dont le rotor fait office de masse d'inertie. Le dispositif de stockage d'énergie embarqué peut être tout autre dispositif de stockage comme des super-condensateurs ou une batterie.

Le dispositif accumulation cinétique d'énergie 15 embarqué est adapté pour fonctionner en régime de décharge lors des phases d'alimentation des équipements auxiliaires 12 et / ou des moteurs de traction 11 et en régime de charge lors de phases de charge. Un ordinateur de bord 38 commande le passage d'un mode de fonctionnement à l'autre du dispositif accumulation cinétique d'énergie 15.

En régime de décharge, le dispositif accumulation cinétique d'énergie 15 se comporte en générateur et génère une tension continue sur le bus de puissance 7.

En régime de charge, le dispositif à accumulation cinétique d'énergie 15 se comporte en moteur, il prélève de l'énergie électrique sur le bus de puissance 7. La tension continue est transformée, par un convertisseur compris dans le dispositif à accumulation cinétique d'énergie 15, en une tension alternative qui alimente en tension alternative le volant d'inertie du dispositif à accumulation cinétique d'énergie 15.

Les phases de charge du dispositif à accumulation cinétique d'énergie 15 sont par exemple les phases de freinage du véhicule pendant lesquelles les moteurs 11 de traction fonctionnent en mode générateur.

De manière connue en soi, le dispositif à accumulation cinétique d'énergie 15 est équipé de moyens de mesure non représentés, de l'énergie emmagasinée dans ledit dispositif 15.

L'installation d'alimentation comporte de façon classique des moyens de mesure de la position du véhicule sur son parcours. Les moyens de mesure, sont par exemple des moyens de mesure de la vitesse des moteurs de traction donnant accès à la vitesse du véhicule de traction et à sa position sur le parcours ou des moyens GPS de localisation de la position du véhicule.

De façon classique, le véhicule comprend des moyens de captage de l'énergie du dispositif de recharge en station 18, non représentés, propres à établir la connexion électrique entre le bus d'alimentation 7 et le dispositif de recharge en station d'arrêt 18 lorsque le véhicule est à l'arrêt en station.

Le dispositif de recharge en station d'arrêt 18 est propre à charger le dispositif à accumulation cinétique d'énergie 15 et à alimenter les équipements auxiliaires 12 lorsque le véhicule est à l'arrêt en station d'arrêt $S_x$ en fournissant de l'énergie électrique sur le bus de puissance 7.

Le dispositif de recharge en station d'arrêt 18 comprend par exemple une ligne caténaire s'étendant le long de la station d'arrêt et les moyens de captage de l'énergie comprennent par exemple un pantographe relié électriquement au véhicule 2 et plus précisément au bus de puissance 7. Un tel dispositif de recharge est décrit dans la demande de brevet EP0982176 A1 déposée par la demanderesse.

A la place d'une ligne caténaire, le dispositif de recharge en station d'arrêt 18 peut comprendre tout autre moyen d'alimentation pouvant être relié au véhicule par un moyen de captage de l'énergie. Un tel moyen d'alimentation est par exemple un troisième rail ou un dispositif d'alimentation par le sol disposé en station d'arrêt.

L'installation d'alimentation du véhicule comprend un dispositif d'alimentation par le sol 19 équipant des portions de la voie 5 en dehors des stations comme représenté sur la figure 2.

Un tel dispositif d'alimentation 19 par le sol est décrit dans le document FR 2762810.

Comme représenté sur la figure 2, le dispositif 19 d'alimentation par le sol est incorporé dans la chaussée au milieu des deux rails de roulement du véhicule et s'étend le long des deux rails de roulement, parallèlement à ceux-ci. Le dispositif d'alimentation par le sol est affleurant à la surface de la voie 5.

De façon connue en soi, le dispositif d'alimentation par le sol 19 est segmenté dans sa direction longitudinale en segments d'alimentation 34 séparés par des segments isolants 36.

Le dispositif d'alimentation par le sol 19 est relié via des sous-stations électriques, non représentées, au réseau de distribution électrique de la ville. Chaque segment d'alimentation 34 est alimenté en énergie électrique uniquement lorsque celui-ci se trouve inscrit dans l'emprise au sol du véhicule 2 évitant tout risque d'électrocution des piétons.

Plus précisément, le dispositif d'alimentation par le sol 19 est adapté pour fournir de l'énergie au véhicule 2 lorsque au moins un segment 34 du tronçon se trouve inscrit dans l'emprise au sol du véhicule 2 et qu' au moins un moyen de captage 22 de l'énergie, porté par le véhicule 2 se trouve en contact physique avec au moins un des segments 34 alimentés en énergie électrique.

Comme visible sur la figure 2, le véhicule 2 est équipé d'un moyen de captage 22 de l'énergie électrique du dispositif d'alimentation par le sol 19.

Le moyen de captage 22, conducteur d'électricité, est fixé au véhicule. Le moyen de captage 22 assure la liaison mécanique et électrique entre le véhicule et le dispositif d'alimentation par le sol 19.

Le moyen de captage 22 comprend deux frotteurs qui sont aptes à effectuer un déplacement entre une position haute non représentée, dans laquelle le moyen de captage 22 n'est pas en contact physique avec la surface du sol de la voie 5, et une position basse, représentée sur la figure 2, dans laquelle les frotteurs sont en contact glissant avec la surface de la voie 5, en particulier avec des segments 34 d'alimentation et des segments isolants 36 lorsque le véhicule 2 se situe sur une portion 20 de la voie 5 équipée d'un dispositif d'alimentation par le sol 19.

L'espacement entre les frotteurs du moyen de captage 22 est supérieure à la longueur d'un segment isolant 36 de manière à assurer l'alimentation continue du bus 7 par l'intermédiaire des frotteurs dont un, au moins, est relié au segment conducteur 34.

De cette manière, comme cela sera explicité dans la suite de la description, le dispositif d'alimentation par le sol 19 est apte alimenter le dispositif 15 à accumulation cinétique d'énergie, les équipements auxiliaires 12 ainsi que moteurs de traction 11, lorsque la connexion électrique entre au moins un segment 34 et le bus 7 de puissance est établie par l'intermédiaire du moyen de captage de l'énergie électrique.

Comme illustré sur la figure 2, l'installation d'alimentation comprend un réseau informatique de bord 37, qui est relié à un ordinateur 38 de bord. L'ordinateur 38 est relié à un instructeur de conduite 39.

L'ordinateur de bord 38 recevant une consigne de l'instructeur de conduite 39, commande le fonctionnement des moteurs de traction 11 , des équipements auxiliaires 12, et dispositif à accumulation cinétique d'énergie 15 par l'intermédiaire du réseau de bord.

L'instructeur de conduite 39 est un manipulateur de conduite apte à être déplacé par le conducteur, pour envoyer soit une consigne de traction soit une consigne de freinage soit une consigne de repos à l'ordinateur de bord 38.

Une consigne de traction est envoyée lorsque les moteurs ont besoin d'énergie, par exemple lors d'une accélération ou lors du franchissement d'une pente ascendante. Dans ce cas, l'ordinateur de bord 38 commande l'alimentation des moteurs de traction 11 par absorption d'énergie sur le bus de puissance 7 de manière à ce que les moteurs de traction 11 génèrent un couple de traction pour tracter le véhicule.

Une consigne de repos est envoyée lorsque les moteurs de traction 11 n'ont pas besoin d'énergie. Le véhicule est soit à l'arrêt soit en marche sur l'erre.

Lorsque l'instructeur de conduite envoie une consigne de freinage à l'ordinateur de bord 38, ce dernier commande la mise en mode freinage des moteurs 11 et l'alimentation du bus de puissance 7 au moyen de l'énergie électrique générée par les moteurs de traction en mode freinage.

En variante l'instructeur de conduite 39 est un dispositif automatique de commande apte à envoyer à l'ordinateur de bord un consigne de traction ou de freinage.

On va maintenant décrire le fonctionnement de l'installation d'alimentation.

Le fonctionnement de l'installation électrique est piloté par l'ordinateur de bord 38 qui dispose des informations sur l'alimentation le moyen de captage de l'énergie 22, la position du véhicule 2 sur son parcours, l'état de charge à accumulation cinétique d'énergie, le plan de route, l'instructeur de conduite 39, les besoins en alimentation des auxiliaires.

L'ordinateur de bord 38 dispose avantageusement d'une table de valeurs d'énergie répertoriant, pour chaque point du parcours du véhicule, l'énergie dont le véhicule 2 a besoin pour atteindre la prochaine station d'arrêt $S_x$ en respectant le plan de route. Ces valeurs sont soit obtenues par simulation soit en moyennant les valeurs obtenues lors des essais préliminaires.

Lorsque le véhicule est arrêté en station d'arrêt $S_x$, l'ordinateur de bord 38 pilote la charge du dispositif à accumulation cinétique d'énergie 15 et des équipements auxiliaires 12 au moyen du dispositif de recharge en station d'arrêt 18 qui fournit de l'énergie électrique au bus de traction 7, le dispositif de recharge 18 étant connecté au bus 7 par un moyen de captage de l'énergie du dispositif de recharge 18 non représenté.

Lorsque le véhicule sort de la station $S_x$, le dispositif à accumulation cinétique d'énergie 15 dispose d'une énergie $Ev_x$ dépendant du plan de route et plus particulièrement du temps d'arrêt du véhicule en station d'arrêt $S_x$ et de l'énergie dont le dispositif à accumulation cinétique d'énergie 15 disposait à l'arrivée en station d'arrêt $S_x$.

Lorsque le véhicule se trouve entre deux stations consécutives $S_x$ et $S_y$, sur une portion de voie dépourvue 21 de dispositif d'alimentation par le sol 19, le véhicule 2 est autonome.

En mode freinage, lorsque l'instructeur de conduite 39 envoie une consigne de freinage, l'ordinateur de bord 38 pilote la récupération de l'énergie de freinage de manière alimenter le dispositif à accumulation cinétique d'énergie 15 et les équipements auxiliaires au moyen de l'énergie fournie sur le bus de puissance 7 par les moteurs de traction 11.

En mode traction l'ordinateur de bord 38 gère l'alimentation des moteurs de traction 11 et des équipements auxiliaires 12, au moyen du dispositif à accumulation cinétique d'énergie 15, qui est alors en mode décharge et délivre de l'énergie électrique sur le bus de puissance 7.

Avant l'arrivée du véhicule sur une portion de voie équipée 20 du dispositif d'alimentation par le sol 19, le conducteur est alerté par un dispositif de signalisation, non représenté, pour commander l'abaissement du moyen de captage 22. Le moyen de captage 22 est abaissé lorsque le véhicule 2 se situe sur une portion de voie équipée 20 du dispositif d'alimentation par le sol 19 de manière à établir le contact physique entre ledit moyen de captage 22 et le au un moins un segment d'alimentation 34 situé au droit dudit moyen de captage 22.

Dans une variante, l'ordinateur de bord 38 commande l'abaissement du frotteur.

L'ordinateur de bord 38 met en oeuvre un procédé d'alimentation pour gérer l'énergie captée par le véhicule 2 au dispositif d'alimentation par le sol 19.

En tout point du trajet $T_{xy}$, l'ordinateur de bord 38 est propre à gérer la circulation de l'énergie dans le véhicule 2 et le fonctionnement des équipements électriques du véhicule (15, 11, 12), en fonction de :

- l'état de charge du volant d'inertie $Evp$ c'est à dire l'énergie contenue dans le dispositif à accumulation cinétique d'énergie au point p du trajet $T_{xy}$
- la position p du véhicule sur le trajet $T_{xy}$
- l'énergie $Et_{py}$ nécessaire pour alimenter les moteurs de traction 11 et les équipements auxiliaires 12 jusqu'à la station suivante en respectant le plan de route.
- l'énergie $Ev_{py}$ que le dispositif à accumulation cinétique d'énergie 15 est susceptible de mettre à disposition des moteurs de traction 11 et des équipements auxiliaires 12 jusqu'à la station $S_y$,
- la consigne de l'instructeur de conduite 39
- le courant maximal que le véhicule peut soutirer au dispositif d'alimentation par le sol,

de manière à respecter le plan de route prédéterminé.

Dans la suite de la description, on suppose que le moyen de captage 22 est abaissé et que le véhicule se déplace sur une portion de voie équipée 20.

Lorsque le véhicule 2 est à l'arrêt en station $S_a$, l'ordinateur de bord 38 pilote la charge du volant d'inertie 14 et l'alimentation des équipements auxiliaires 12 au moyen du dispositif de recharge 18 en station d'arrêt.

Le plan de route décrit ci-dessus, prévoyant un temps d'arrêt suffisamment long pour charger complètement le dispositif à accumulation cinétique d'énergie 15 en station d'arrêt $S_a$, le volant d'inertie est totalement chargé en sortie de la station $S_a$. Sur la portion de voie R1 s'étendant sur l'ensemble du trajet $T_{ab}$, les moteurs de traction 11 et les équipements auxiliaires 12 sont alimentés sur l'ensemble du trajet $T_{ab}$, par le dispositif d'alimentation par le sol 19 en fonction de leurs besoins en énergie respectifs.

En se référant au tableau des consommations d'énergie du véhicule 2, on constate que le véhicule 2 a besoin de l'énergie que peut lui fournir le dispositif d'APS sur la section de voie R2 uniquement si le véhicule rencontre un évènement imprévu sur son trajet consommant une énergie supérieure à 0,63 kWh, l'énergie $Er_{xy}$ étant égale à 4,63 kWh. Sur le tronçon de voie R2, le dispositif d'alimentation par le sol 19 est susceptible de fournir de l'énergie au véhicule 2 par l'intermédiaire du moyen de captage 22 qui est en contact électrique avec au moins un segment d'alimentation 34.

Lorsque le véhicule se trouve sur la portion R2, deux situations peuvent se présenter. Le véhicule peut avoir rencontré ou pas un évènement imprévu.

Si le véhicule 2 a rencontré un évènement imprévu au niveau de l'intersection I, il a été contraint à marquer l'arrêt avant l'intersection I.

Lors de l'arrêt du véhicule 2, avant l'intersection I, et lorsque le véhicule démarre et accélère, les équipements auxiliaires 12 et le dispositif à accumulation cinétique d'énergie 15, sont alimentés par le dispositif d'alimentation par le sol 19. Sur la portion de voie R2, l'ordinateur de bord 38 compare l'état de charge $Evp$ du dispositif à accumulation cinétique d'énergie 15 à l'énergie nécessaire pour atteindre la station d'arrêt suivante $S_c$ avec l'énergie $Et_{py}$ en respectant le plan de route, et commande la charge du dispositif à accumulation cinétique d'énergie 15 si l'énergie restant dans le dispositif à accumulation cinétique d'énergie 15 est insuffisante pour atteindre la station suivante avec une énergie $Ev_c$ en respectant le plan de route.

Ce mode de réalisation présente l'avantage de ne pas décharger le dispositif à accumulation cinétique d'énergie 15 en un emplacement où la puissance susceptible d'être consommée par les moteurs de traction 11 est importante. L'énergie consommée sur la portion de voie 20 équipée du dispositif d'alimentation par le sol 19 est également susceptible d'être importante. En l'espèce, si le véhicule marque un arrêt intempestif au niveau de l'intersection I, les moteurs de traction 11 sont très consommateurs de puissance lors du démarrage et de la montée en vitesse du véhicule 2.

Dans un second mode de réalisation, la puissance soutirée par le véhicule au dispositif d'alimentation par le sol est limitée. Lors du démarrage du véhicule 2 et de la montée en vitesse du véhicule, l'ordinateur de bord 38 pilote donc l'alimentation des équipements auxiliaires 12 par le dispositif d'alimentation par le sol 19 tandis que les moteurs de traction 11 sont alimentés au moyen du dispositif d'alimentation par le sol 19 et du dispositif à accumulation cinétique d'énergie 15 simultanément.

Ce mode de réalisation présente l'avantage de soutirer une puissance, et donc une intensité raisonnable au dispositif d'alimentation par le sol 19 tout en limitant l'énergie que fournit le dispositif à accumulation cinétique d'énergie 15 aux moteurs de traction 11 et donc la décharge dispositif à accumulation cinétique d'énergie 15.

L'agencement du dispositif d'alimentation par le sol 19 en un emplacement où la puissance consommée par les moteurs de traction 11 est susceptible d'être importante, en l'espèce une intersection permet de limiter la décharge du dispositif à accumulation cinétique d'énergie 15 et/ou de charger ledit dispositif à accumulation cinétique d'énergie 15, en un emplacement où il serait susceptible de beaucoup se décharger.

Si le véhicule n'a pas rencontré d'évènement imprévu au niveau de l'intersection I et que le dispositif à accumulation cinétique d'énergie 15 stocke suffisamment d'énergie pour atteindre la station $S_c$ en respectant le plan de route avec une énergie $Ev_c$, l'ordinateur de bord 38 commande quand même la charge du dispositif à accumulation cinétique d'énergie 15 et l'alimentation des moteurs de traction 11 et des équipements auxiliaires 12 au moyen du dispositif d'alimentation par le sol 19.

Cela permet de recharger le dispositif à accumulation cinétique d'énergie 15 et de disposer, sur le restant du trajet $T_{bc}$ d'un surplus d'énergie permettant de faire face à un autre évènement imprévu sur le trajet $T_{bc}$ ou de faire face à une panne du dispositif de recharge 18 en station $S_c$ ou de réduire le temps d'arrêt en station $S_c$ pour charger le volant d'inertie 14 d'une quantité $Ev'_c$.

Dans une variante, le véhicule 2 n'a pas rencontré d'évènement imprévu au niveau de l'intersection I et le dispositif à accumulation cinétique d'énergie 15 stocke suffisamment d'énergie pour atteindre la station $S_c$ en respectant le plan de route avec une énergie $Ev_c$, l'ordinateur de bord 38 commande l'alimentation des moteurs de traction 11 et des équipements auxiliaires 12 au moyen du dispositif à accumulation cinétique d'énergie 15. Cela permet de ne pas soutirer d'énergie au dispositif d'alimentation par le sol sur la portion de voie R2.

Lorsque le véhicule 2 est sur le point de quitter la portion de voie 20, équipée du dispositif d'alimentation par le sol 19, le conducteur reçoit une consigne au moyen d'un dispositif de signalisation pour commander la levée du moyen de captage 22.

En variante, la levée du moyen de captage 22 est automatiquement réalisée lorsque le véhicule quitte la portion de voie 20.

Si le véhicule freine sur la portion de voie R2, l'ordinateur de bord 38 commande la charge du dispositif à accumulation cinétique d'énergie 15 et l'alimentation des équipements auxiliaires 12 au moyen du dispositif d'alimentation par le sol 19 et / ou des moteurs de traction 11.

Sur la portion de voie R3, étant en pente ascendante dans le sens de déplacement du véhicule 2, l'ordinateur de bord 38 peut commander soit la charge du dispositif à accumulation cinétique d'énergie 15 et l'alimentation des équipements auxiliaires 12 et des moteurs de traction 11, soit l'alimentation des moteurs de traction 11 et des équipements auxiliaires 12 sans charger le dispositif à accumulation cinétique d'énergie 15.

Les deux stratégies présentent l'avantage respectif de ne pas décharger le dispositif à accumulation cinétique d'énergie 15 en un emplacement où la puissance et l'énergie consommées par les moteurs de traction 11 est importante du fait de la pente ascendante. De plus, les deux stratégies présentent les avantages respectifs de recharger le dispositif à accumulation cinétique d'énergie 15 et de ne pas soutirer de puissance trop importante au dispositif d'alimentation par le sol 19.

La portion de voie R4 est une zone plane de la voie 5 qui est définie comme une zone d'accélération sur le plan de route.

Sur la portion de voie R4, l'ordinateur de bord 38 peut commander soit la charge du dispositif à accumulation cinétique d'énergie 15 et l'alimentation des moteurs de traction 11 et des équipements auxiliaires, soit l'alimentation des moteurs de traction 11 et des équipements auxiliaires 12 sans charger le dispositif à accumulation cinétique d'énergie 15.

Lorsque le véhicule 2 est sur une portion de voie équipée 20 d'un dispositif d'alimentation par le sol 19, l'ordinateur de bord 38 peut mettre en oeuvre plusieurs stratégies de fonctionnement des équipements du véhicule et de circulation de l'énergie dans le véhicule tout en respectant le plan de route. Cela présente l'avantage d'améliorer la qualité de l'installation d'alimentation en fonction des priorités de l'exploitant (soutirer un courant faible au dispositif d'alimentation par le sol, limiter le temps d'arrêt en station, disposer d'un maximum d'énergie pour faire face aux évènements imprévus).

En variante, lorsque le véhicule circulant sur un trajet $T_{xy}$ arrive sur une portion de voie équipée 20 d'un dispositif d'alimentation par le sol 19 , l'ordinateur de bord 38 pilote l'abaissement du moyen de captage 22 uniquement lorsque à l'arrivée sur la portion de voie équipée 20, l'énergie contenue dans le dispositif à accumulation cinétique en énergie 15 est insuffisante pour alimenter les moteurs de traction 11 et les équipements auxiliaires 12 pour aller jusqu'à la station Syen respectant le plan de route déterminé par l'exploitant.

Le plan de route du véhicule est tel que :

- le plan de route,

  - le temps de parcours $t_{xy}$ d'un trajet $T_{xy}$ est compris entre 30 secondes et 120 secondes ; et de préférence, le temps de parcours est de 60 secondes ;
  - le temps maximal d'arrêt $t_{ax}$ du véhicule en station d'arrêt est compris entre 15 secondes et 35 secondes ; et de préférence de 20 secondes ;
  - le niveau de confort pour le passager est correspond à une énergie comprise entre 18 kWh lorsqu'il n'y a pas de climatisation ni chauffage et 132 kWh lorsqu'il y a de la climatisation par exemple

- les évènements imprévus auxquels doit être capable de faire face ledit véhicule comprennent au moins un événement consommant une énergie comprise entre 0,3kWh et 2,2kWh, il s'agit par exemple de l'énergie consommée par un arrêt inoponé de 1 minute.

**Revendications**

1. Système de transport ferroviaire comprenant un véhicule ferroviaire (2) et une installation d'alimentation du véhicule ferroviaire (2) comprenant une voie (5) jalonnée de stations d'arrêt (Sx), ledit véhicule (2) comportant :

   - au moins un moteur de traction (11) et au moins un équipement auxiliaire (12), et
   - un dispositif de stockage d'énergie (15) embarqué à bord du véhicule (2), ledit dispositif de stockage d'énergie (15) embarqué étant susceptible d'alimenter ledit au moins un moteur de traction (11) et ledit au moins un équipement auxiliaire (12),

   et étant apte :

   - à être alimenté en énergie électrique, lorsque ledit véhicule (2) se trouve à l'arrêt en station d'arrêt ($S_x$), et
   - à circuler sur la voie (5), où l'installation d'alimentation comprend un dispositif d'alimentation par le sol (19) installé sur une portion de la voie (5) entre deux stations d'arrêt successives ($S_x$, $S_y$), l'énergie que le dispositif de stockage d'énergie (15) est susceptible de mettre à disposition dudit au moins un moteur de traction (11) et/ou dudit au moins un équipement auxiliaire (12) sur un trajet $T_{xy}$ entre les deux stations d'arrêt successives ($S_x$, $S_y$) étant insuffisante pour respecter un plan de route prédéfini, ledit dispositif d'alimentation par le sol (19) étant susceptible d'alimenter au moins ledit dispositif de stockage d'énergie (15), ou ledit au moins un moteur de traction (11) ou ledit au moins un équipement auxiliaire (12) lorsque ledit véhicule (2) est connecté audit dispositif d'alimentation par le sol (19), et en ce que le dispositif d'alimentation par le sol (19) est segmenté dans sa direction longitudinale en segments d'alimentation (34) séparés par des segments isolants (36), chaque segment d'alimentation par le sol étant propre à être alimenté en énergie électrique uniquement lorsque celui-ci se trouve inscrit dans l'emprise au sol d'un véhicule (2).

2. Système de transport ferroviaire selon la revendication 1, **caractérisé en ce qu'**un plan de route définit, sur un trajet $T_{xy}$ entre les deux stations d'arrêt consécutives ($S_x$, $S_y$) :

   - un temps de parcours $t_{xy}$ d'un trajet $T_{xy}$
   - un temps maximal d'arrêt $t_{ax}$ du véhicule en station d'arrêt $S_x$
   - un niveau de confort pour le passager
   - des évènements imprévus qui entraîneront une surconsommation d'énergie, auxquels doit être capable de faire face ledit véhicule (2).

3. Système de transport ferroviaire selon l'une quelconque des revendications précédentes, **caractérisé en ce que**, le dispositif d'alimentation par le sol (19) ne s'étend pas sur toute la longueur de la voie (5) entre deux stations consécutives ($S_x$, $S_y$).

**4.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$, $S_y$) sur laquelle l'énergie et/ou la puissance susceptibles d'être consommées par ledit au moins un moteur de traction (11) est plus importante que sur le reste du parcours.

**5.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$, $S_y$) sur laquelle l'énergie et/ou la puissance susceptibles d'être consommée par ledit au moins un équipement auxiliaire (12) est plus importante que sur le reste du parcours.

**6.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$, $S_y$), la dite portion de voie (5) étant en pente ascendante.

**7.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$; $S_y$), la dite portion de voie (5) étant une zone d'accélération sur le plan de route.

**8.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$; $S_y$), la dite portion de voie(5) étant une zone sur laquelle le véhicule est susceptible de rencontrer un événement imprévu qui entraînerait une surconsommation d'énergie.

**9.** Système de transport ferroviaire selon l'une quelconque des revendications précédentes, **caractérisé en ce qu'**un dispositif d'alimentation par le sol (19) est disposé sur une portion de voie (5) entre deux stations consécutives ($S_x$; $S_y$), la dite portion de voie (5) s'étendant de façon continue sur une portion de voie sur laquelle le véhicule est susceptible d'effectuer un arrêt suivi d'un redémarrage et d'une montée en vitesse.

**10.** Système de transport ferroviaire selon l'une quelconque des revendications 2 à 9, **caractérisée en ce que** dans le plan de route,

- le temps de parcours $t_{xy}$ d'un trajet $T_{xy}$ est compris entre 30 secondes et 120 secondes ;

- le temps maximal d'arrêt $t_{ax}$ du véhicule en station d'arrêt est compris entre 15 secondes et 35 secondes ;
- le niveau de confort pour le passager est correspond à une énergie comprise entre 18 kWh et 132 kWh,
- les évènements auxquels doit être capable de faire face ledit véhicule comprennent au moins un événement consommant une énergie comprise entre 0,3kWh et 2,2kWh.

**11.** Système de transport ferroviaire selon l'une quelconque des revendications précédentes, **caractérisé en ce que** le véhicule ferroviaire comprend un ordinateur de bord (38) propre à piloter le fonctionnement des équipements électriques du véhicule (11, 12, 15) en un point p du trajet ($T_{xy}$) entre deux stations successives ($S_x$) et ($S_y$) et/ou l'abaissement d'un moyen de captage (22) en fonction des paramètres suivants :

- l'état de charge d'un volant d'inertie Evp c'est à dire l'énergie contenue dans le dispositif de stockage d'énergie (15) au point p du trajet $T_{xy}$
- la position p du véhicule sur le trajet $T_{xy}$
- l'énergie $Et_{py}$ nécessaire pour alimenter les moteurs de traction (11) et les équipements auxiliaires (12) jusqu'à la station suivante en respectant le plan de route,
- l'énergie $Ev_{py}$ que le dispositif de stockage d'énergie (15) est susceptible de mettre à disposition des moteurs de traction (11) et des équipements auxiliaires (12) jusqu'à la station $S_y$,
- la consigne de l'instructeur de conduite (39),
- le courant maximal que le véhicule peut soutirer au dispositif d'alimentation par le sol (19).

**12.** Système de transport ferroviaire selon la revendication précédente, **caractérisé en ce que** lorsque le véhicule est connecté au dispositif d'alimentation par le sol (19) l'ordinateur de bord (38) est propre à piloter l'alimentation des équipements électriques du véhicule (11, 12, 15) au moyen du dispositif d'alimentation par le sol (19) de manière à :

- soit assister le dispositif de stockage d'énergie (15) pour alimenter les moteurs de traction (11) et les équipements auxiliaires (12)
- soit alimenter le dispositif de stockage d'énergie (15) ainsi que le moteur de traction (11) et les équipements auxiliaires (12)
- soit alimenter le moteur de traction (11) et les équipements auxiliaires (12) uniquement.

**Patentansprüche**

**1.** Schienentransport-System mit einem Schienenfahrzeug (2) und einer Einrichtung zur Energieversorgung des Schienenfahrzeugs (2), mit einer Fahrspur (5), die von Haltestationen (Sx) markiert ist, wobei das Fahrzeug (2) aufweist:

- wenigstens einen Antriebsmotor (11) und wenigstens ein Hilfsbetriebsmittel (12), und
- eine Energiespeichervorrichtung (15), die an Bord des Fahrzeugs (2) untergebracht ist, wobei die untergebrachte Energiespeichervorrichtung (15) geeignet ist, um den besagten wenigstens einen Antriebsmotor (11) und das besagte wenigstens eine Hilfsbetriebsmittel (12) mit Energie zu versorgen,

und in der Lage ist:

- mit elektrischer Energie versorgt zu werden, wenn das besagte Fahrzeug (2) sich im Halt in einer Haltestation ($S_x$) befindet, und
- auf der Fahrspur (5) zu fahren,

wobei
die Einrichtung zur Energieversorgung aufweist eine Vorrichtung zur Energieversorgung über den Boden (19), die an einem Abschnitt der Fahrspur (5) zwischen zwei aufeinanderfolgenden Haltestationen ($S_x$, $S_y$) installiert ist, wobei die Energie, mit der die Energiespeichervorrichtung (15) in der Lage ist, den besagten wenigstens einen Antriebsmotor (11) und/oder das besagte wenigstens eine Hilfsbetriebsmittel (12) auf einem Weg $T_{xy}$ zwischen den beiden aufeinanderfolgenden Haltestationen ($S_x$, $S_y$) in Betrieb zu setzen, nicht ausreichend ist, um einem vordefinierten Routenplan nachzukommen, wobei die besagte Vorrichtung zur Energieversorgung über den Boden (19) in der Lage ist, wenigstens die besagte Energiespeichervorrichtung (15) oder den besagten wenigstens einen Antriebsmotor (11) oder das besagte wenigstens eine Hilfsbetriebsmittel (12) mit Energie zu versorgen, wenn das besagte Fahrzeug (2) mit der besagten Vorrichtung zur Energieversorgung über den Boden (19) verbunden ist, und wobei die Vorrichtung zur Energieversorgung über den Boden (19) in ihrer Längsrichtung in Energieversorgungssegmente (34) segmentiert ist, die durch Isoliersegmente (36) separiert sind, wobei jedes Segment zur Energieversorgung über den Boden in der Lage ist, einzig mit elektrischer Energie versorgt zu werden, wenn es sich unter dem Zusammenwirkungseinfluss mit dem Boden eines Fahrzeugs (2) befindet.

**2.** Schienentransportsystem gemäß Anspruch 1, **dadurch gekennzeichnet, dass** ein Routenplan auf einem Weg $T_{xy}$ zwischen den beiden aufeinanderfolgenden Haltestationen ($S_x$, $S_y$) definiert:

- eine Fahrstreckenzeit $t_{xy}$ eines Wegs $T_{xy}$
- eine maximale Haltezeit $t_{ax}$ des Fahrzeugs in der Haltestation $S_x$
- ein Komfortniveau für den Passagier
- unvorhergesehene Ereignisse, die einen Überverbrauch an Energie verursachen, welchen das besagte Fahrzeug (2) nachkommen können muss.

**3.** Schienentransportsystem gemäß irgendeinem der vorhergehenden Ansprüche, **dadurch gekennzeichnet, dass** die Vorrichtung zur Energieversorgung über den Boden (19) sich nicht über die gesamte Länge der Fahrspur (5) zwischen zwei aufeinanderfolgenden Stationen ($S_x$, $S_y$) erstreckt.

**4.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, an welchem die Energie und/oder die Leistung, die von dem wenigstens einen Antriebsmotor (11) verbrauchbar sind, umfangreicher ist als auf dem Rest der Fahrstrecke.

**5.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, an welchem die Energie und/oder die Leistung, die von dem besagten wenigstens einen Hilfsbetriebsmittel (12) verbrauchbar ist, umfangreicher ist als auf dem Rest der Fahrstrecke.

**6.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, wobei der besagte Abschnitt der Fahrspur (5) ansteigend geneigt ist.

**7.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, wobei der besagte Abschnitt der Fahrspur (5) eine Beschleunigungszone des Routenplans ist.

**8.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, wobei der besagte Abschnitt der Fahrspur (5) eine Zone ist, in welcher das Fahrzeug auf ein unerwartetes Ereignis treffen kann, welches einen Überverbrauch an Energie verursacht.

**9.** Schienentransportsystem gemäß irgendeinem der vorhergehenden Ansprüche, **dadurch gekennzeichnet, dass** eine Vorrichtung zur Energieversorgung über den Boden (19) an einem Abschnitt der Fahrspur (5) zwischen zwei aufeinanderfolgenden Stationen ($S_x$, $S_y$) angeordnet ist, wobei der besagte Abschnitt der Fahrspur (5) sich in einer kontinuierlichen Weise an einem Abschnitt der Fahrspur erstreckt, an welchem das Fahrzeug einen Halt durchführen kann, der von einem Wiederanfahren und einem Geschwindigkeitsanstieg gefolgt ist.

**10.** Schienentransportsystem gemäß irgendeinem der Ansprüche 2 bis 9, **dadurch gekennzeichnet, dass** beim Routenplan

    - die Fahrstreckenzeit $t_{yx}$ eines Wegs $T_{xy}$ zwischen 30 Sekunden und 120 Sekunden beträgt,
    - die maximale Haltezeit $t_{ax}$ des Fahrzeugs in einer Haltestation zwischen 15 Sekunden und 35 Sekunden beträgt,
    - das Komfortniveau für den Passagier zu einer Energie korrespondiert, die zwischen 18kWh und 132 kWh beträgt,
    - die Ereignisse, welchen das besagte Fahrzeug nachkommen können muss, aufweisen wenigstens ein Ereignis, das eine Energie verbraucht, die zwischen 0,3kWh und 2,2 kWh liegt.

**11.** Schienentransportsystem gemäß irgendeinem der vorhergehenden Ansprüche, **dadurch gekennzeichnet, dass** das Schienenfahrzeug einen Bordrechner (38) aufweist, der in der Lage ist, den Betrieb der elektrischen Ausrüstungen des Fahrzeugs (11, 12, 14) in einem Punkt p des Wegs ($T_{xy}$) zwischen zwei aufeinanderfolgenden Stationen ($S_x$) und ($S_y$) und/oder das Absenken eines Abgreifmittels (22) in Abhängigkeit von den nachfolgenden Parametern zu steuern:

    - dem Lastzustand eines Schwungrads Evp, das heißt der Energie, die in der Energiespeichervorrichtung (15) enthalten ist im Punkt p des Wegs $T_{xy}$
    - der Position p des Fahrzeugs auf dem Weg $T_{xy}$
    - der Energie $Et_{py}$, die erforderlich ist zum Energieversorgen der Antriebsmotoren (11) und der Hilfsbetriebsmittel (12) bis zur folgenden Station unter Einhaltung des Routenplans,
    - der Energie $Ev_{py}$, mit der die Energiespeichervorrichtung (15) die Antriebsmotoren (11) und die Hilfsbetriebsmittel (12) betreiben kann bis zur Station $S_y$,
    - der Anweisung des Fahrinstrukteurs (39),
    - dem maximalen Strom, den das Fahrzeug von der Vorrichtung zur Energieversorgung über den Boden (19) entnehmen kann.

**12.** Schienentransportsystem gemäß dem vorhergehenden Anspruch, **dadurch gekennzeichnet, dass**, wenn das Fahrzeug mit der Vorrichtung zur Energieversorgung über den Boden (19) verbunden ist, der Bordrechner (38) in der Lage ist, die Energieversorgung der elektrischen Ausrüstungen des Fahrzeugs (11, 12, 15) mittels der Vorrichtung zur Energieversorgung über den Boden (19) in einer Weise zu steuern, um:

    - die Energiespeichervorrichtung (15) zu unterstützen beim Energieversorgen der Antriebsmotoren (11) und der Hilfsbetriebsmittel (12)
    - die Energiespeichervorrichtung (15) sowie den Antriebsmotor (11) und die Hilfsbetriebsmittel (12) mit Energie zu versorgen
    - einzig den Antriebsmotor (11) und die Hilfsbetriebsmittel (12) mit Energie zu versorgen.

**Claims**

**1.** Railway transport system comprising a railway vehicle (2) and an installation for supplying power to the railway vehicle (2) comprising a track (5) punctuated by station stops (Sx), said vehicle (2) including:

    - at least one traction motor (11) and at least one auxiliary equipment item (12), and
    - an energy storage device (15) installed onboard the vehicle (2), said on-board energy storage device (15) being capable of supplying power to said at least one traction motor (11) and said at least one auxiliary equipment item (12),

and being able:

    - to be supplied with electrical energy when said vehicle (2) is stopped at a station stop ($S_x$), and
    - to travel on the track (5),

where the power supply installation comprises a ground power supply device (19) installed on a portion of the track (5) between two successive station stops ($S_x$, $S_y$), the energy that the energy storage device (15) is capable of making available to said at least one traction motor (11) and/or said at least one auxiliary equipment item (12) on a trip $T_{xy}$ between the two successive station stops ($S_x$, $S_y$) being insufficient to fulfil a predefined route plan, said ground power supply device (19) being capable of supplying power to at least said energy storage device (15) or said at least one traction motor (11) or said at least one auxiliary equipment item (12) when said vehicle (2) is connected to said ground power supply device (19), and in that the ground power supply device (19) is segmented in its longitudinal direction into power supply segments (34) separated by insulating segments (36), each ground power supply segment being able to be supplied with electrical energy only when it is inside the footprint of a vehicle (2) .

2. Railway transport system according to claim 1, **characterized in that** a route plan defines, on a trip $T_{xy}$ between the two consecutive station stops ($S_x$, $S_y$) :

   - a journey time $t_{xy}$ of a trip $T_{xy}$,
   - a maximum stoppage time $t_{ax}$ of the vehicle at a station stop $S_x$,
   - a passenger comfort level,
   - unexpected events that will lead to an overconsumption of energy, with which said vehicle (2) must be able to cope.

3. Railway transport system according to any one of the preceding claims, **characterized in that** the ground power supply device (19) does not extend over the entire length of the track (5) between two consecutive stations ($S_x$, $S_y$).

4. Railway transport system according to any one of the preceding claims, **characterized in that** a ground power supply device (19) is disposed on a portion of track (5) between two consecutive stations ($S_x$, $S_y$) on which the energy and/or the power liable to be consumed by said at least one traction motor (11) is greater than on the rest of the journey.

5. Railway transport system according to any one of the preceding claims, **characterized in that** a ground power supply device (19) is disposed on a portion of track (5) between two consecutive stations ($S_x$, $S_y$) on which the energy and/or the power liable to be consumed by said at least one auxiliary equipment item (12) is greater than on the rest of the journey.

6. Railway transport system according to any one of the preceding claims, **characterized in that** a ground power supply device (19) is disposed on a portion of track (5) between two consecutive stations ($S_x$, $S_y$), said portion of track (5) being on an uphill slope.

7. Railway transport system according to any one of the preceding claims, **characterized in that** a ground power supply device (19) is disposed on a portion of track (5) between two consecutive stations ($S_x$; $S_y$), said portion of track (5) being an acceleration zone on the route plan.

8. Railway transport system according to any one of the preceding claims, **characterized in that** a ground power supply device (19) is disposed on a portion of track (5) between two consecutive stations ($S_x$; $S_y$), said portion of track (5) being a zone in which the vehicle is liable to encounter an unexpected event that would lead to an overconsumption of energy.

9. Railway transport system according to any one of the preceding claims, **characterized in that** a ground power supply device (19) is disposed on a portion of track (5) between two consecutive stations ($S_x$; $S_y$), said portion of track (5) extending continuously on a portion of track in which the vehicle is liable to stop and then restart and accelerate.

10. Railway transport system according to any one of claims 2 to 9, **characterized in that**, in the route plan,

    - the journey time $t_{xy}$ of a trip $T_{xy}$ is between 30 seconds and 120 seconds,
    - the maximum stoppage time $t_{ax}$ of the vehicle at a station stop is between 15 seconds and 35 seconds,
    - the passenger comfort level corresponds to an energy between 18 kWh and 132 kWh,
    - the events with which said vehicle must be able to cope include at least one event consuming between 0.3 kWh and 2.2 kWh of energy.

11. Railway transport system according to any one of the preceding claims, **characterized in that** the railway vehicle comprises an on-board computer (38) which is able to control the operation of the electrical equipment items (11, 12, 15) of the vehicle at a point p of the trip ($T_{xy}$) between two successive stations ($S_x$) and ($S_y$) and/or the lowering of a pick-up means (22) as a function of the following parameters:

    - the state of charge of a flywheel Evp, that is to say the energy contained in the energy storage device (15) at the point p of the trip $T_{xy}$
    - the position p of the vehicle on the trip $T_{xy}$
    - the energy $Et_{py}$ necessary for powering the traction motors (11) and the auxiliary equipment items (12) as far as the next station while fulfilling the route plan,
    - the energy $Ev_{py}$ that the energy storage device (15) is capable of making available to the traction motors (11) and the auxiliary equipment items (12) as far as the station $S_y$,
    - the command from the drive control system (39),
    - the maximum current that the vehicle can draw from the ground power supply device (19).

12. Railway transport system according to the preceding claim, **characterized in that**, when the vehicle is connected to the ground power supply device (19), the on-board computer (38) is able to control the supply of power to the electrical equipment items (11, 12, 15) of the vehicle by the ground power supply device (19) so as:

- either to assist the energy storage device (15) to power the traction motors (11) and the auxiliary equipment items (12),
- or to power the energy storage device (15) as well as the traction motor (11) and the auxiliary equipment items (12),
- or to power only the traction motor (11) and the auxiliary equipment items (12).

| Trajet $T_{xy}$ | $l_{xy}$ (mètres) | $P_{xy}$ (°/oo) | $t_{xy}$ (secondes) | $Ea_{xy}$ (kWh) | $Es_{xy}$ (kWh) | $Em_{xy}$ (kWh) | $Et_{xy}$ (kWh) | $Eb_{xy}$ (kWh) | $Ef_{xy}$ (kWh) | $Er_{xy}$ (kWh) |
|---|---|---|---|---|---|---|---|---|---|---|
| Tab | 750 | 37,1 | 84 | 1,40 | 2,2 | 6,33 | 9,93 | 7,73 | 0,42 | 9,51 |
| Tbc | 1089 | -13,2 | 99 | 1,65 | 2,2 | 3,04 | 6,89 | 4,69 | 2,26 | 4,63 |
| Tcd | 836 | -5,8 | 101,5 | 1,89 | 2,2 | 2,19 | 6,08 | 3,88 | 0,89 | 5,39 |
| Tde | 475 | -3,0 | 54 | 0,90 | 2,2 | 1,31 | 4,41 | 2,21 | 0,60 | 3,81 |
| Tef | 912 | -3,8 | 96,5 | 1,61 | 2,2 | 2,20 | 6,01 | 3,81 | 0,96 | 5,05 |
| Tfg | 500 | -10,7 | 57 | 0,95 | 2,2 | 1,39 | 4,54 | 2,34 | 1,01 | 3,53 |
| Tgh | 532 | -14,2 | 58,5 | 0,98 | 2,2 | 0,92 | 4,10 | 1,90 | 0,69 | 3,41 |
| Thi | 416 | -10,4 | 48 | 0,80 | 2,2 | 0,77 | 3,77 | 1,57 | 0,56 | 3,21 |
| Tij | 888 | 7,8 | 121,5 | 2,03 | 2,2 | 4,02 | 8,25 | 6,05 | 1,04 | 7,21 |
| Tjk | 423 | 7,7 | 58 | 0,97 | 2,2 | 2,08 | 5,25 | 3,05 | 0,37 | 4,88 |

Tableau A

EP 2 162 313 B1

Altitude (m)

$T_{ab}$

$S_a$

$R_1$

18

$S_b$

$T_{bc}$

$R_2$

I

5

$S_c$

$T_{cd}$

$S_d$

$T_{de}$

$R_3$

$S_e$

$T_{ef}$

$S_f$

$R_4$

Distance (m)

FIG 1

**FIG 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0982176 A
- EP 2762810 A
- WO 2008087287 A
- EP 0982176 A1
- FR 2762810